# EUROPÄISCHE PATENTSCHRIFT

(11) **EP 2 971 759 B1**
(45) Veröffentlichungstag und Bekanntmachung des Hinweises auf die Patenterteilung: **03.05.2017**
(21) Anmeldenummer: 14718908.8
(22) Anmeldetag: 12.03.2014
(51) Int. Cl.: F03D 9/00, F03D 1/04, F03D 3/04, F03G 6/04

(54) **DRUCKERZEUGUNGSEINRICHTUNG ZUR ERZEUGUNG VON ENERGIE AUS SOLAR- UND/ODER WINDENERGIE**
PRESSURE PRODUCING DEVICE TO COLLECT ENERGY FROM SOLAR AND/OR WIND SOURCES
DISPOSITIF DE PRODUCTION DE PRESSION COLLECTANT DE L'ÉNERGIE PROVENANT DE SOURCES SOLAIRE ET / OU ÉOLIENNES

(30) Priorität: 13.03.2013 DE 102013004277; 13.03.2013 DE 202013002400 U
(43) Veröffentlichungstag der Anmeldung: 20.01.2016
(73) Patentinhaber: Doneff, Hans-Peter, 80992 München (DE)
(72) Erfinder: Doneff, Hans-Peter, 80992 München (DE)
(74) Vertreter: Leitner, Waldemar
(86) Internationale Anmeldenummer: PCT/EP2014/000654
(87) Internationale Veröffentlichungsnummer: WO 2014/139675

(56) Entgegenhaltungen:
- WO-A1-2009/154594
- DE-A1-102009 010 087
- US-A- 4 085 667
- US-A- 4 165 036
- US-A- 4 222 242
- US-A- 4 379 972
- US-A1- 2004 148 933
- US-A1- 2011 198 855

## Beschreibung

Die Erfindung betrifft eine Druckerzeugungseinrichtung für eine Anlage zur Erzeugung von Energie aus Solar- und/oder Windenergie, wobei die Anlage eine Turbine aufweist, die über eine Leitung mit der Druckerzeugungseinrichtung verbunden ist, wobei die Druckerzeugungseinrichtung ein Gehäuse mit mindestens einer Lufteintrittsöffnung, durch welche Luft in das Innere der Druckerzeugungseinrichtung eintretbar ist, und mit mindestens einer Luftaustrittsöffnung, durch welche erwärmte Luft aus dem Inneren der Druckerzeugungseinrichtung austretbar ist, aufweist, wobei die Druckerzeugungseinrichtung Mittel zur Umwandlung der einfallenden Solarenergie in thermische Energie aufweist, so dass durch diese Mittel die im Innenraum der Druckerzeugungseinrichtung befindliche Luft erwärmbar ist, wodurch die Druckerzeugungseinrichtung in deren Inneren einen Unterdruck erzeugt, dass die Lufteintrittsöffnung der Druckerzeugungseinrichtung durch ein oder mehrere Öffnungen im Gehäuse ausgebildet ist oder sind.

Es ist bekannt, Sonnenenergie photovoltaisch oder unter Verwendung von Spiegelsystemen zur Gewinnung von elektrischem Strom zu verwenden. Auch ist es bekannt, dass Windenergie dazu verwendet wird, in Windkraftanlagen mittels Propeller oder mittels Savonius- und Darrieux-Rotoren oder ähnlichen Einrichtungen elektrischem Strom zu gewinnen. Beide Arten der Energiegewinnung besitzen ihre bekannten Nachteile: Scheint keine Sonne, so können Solarenergie nutzende Anlagen keinen elektrischen Strom erzeugen. Weht kein Wind, so ist die Erzeugung von Strom durch die Ausnutzung der Windkraft nicht möglich.

Eine gattungsgemäße Vorrichtung ist aus der US 2004/0148933 A1 bekannt. Diese Druckschrift beschreibt eine Vorrichtung zur Erzeugung von Energie durch Umwandlung von Solar- und/oder Windenergie. Die Vorrichtung weist eine Druckerzeugungseinrichtung auf, welche eine Absorbereinheit besitzt, die einen gasdurchlässigen Körper aus lichtabsorbierendem Material aufweist. Die Absorbereinheit ist mit Abstand von einem Boden der Druckerzeugungseinrichtung angeordnet. In einer Seitenwand ist eine Anzahl von Strömungskanälen angeordnet, welche dazu dienen, eine Strömung zwischen dem Inneren der Vorrichtung und der Umgebungsluft zuzulassen. In den Strömungskanälen ist jeweils eine Turbine angeordnet. Das lichtabsorbierende, gasdurchlässige Material dient dazu, dass es Sonnenlicht auffängt und in thermische Energie umwandelt. Hierdurch wird die Luft in der Umgebung der Druckerzeugungseinrichtung erwärmt, wodurch sie nach oben abströmt. In der bekannten Druckerzeugungseinrichtung entsteht somit ein Unterdruck, welcher bewirkt, dass durch die Strömungskanäle Luft nachströmt und dadurch die Turbinen antreibt.

Nachteilig daran ist, dass die ins Innere der Druckerzeugungseinrichtung eintretende Luft dann wieder durch das gasdurchlässige Material hindurch austreten muss, dass also hier dieses gasdurchlässige Material den Strömungsfluß behindert. Hierdurch resultiert ein schlechter Wirkungsgrad.

Die US 4,379,972 A beschreibt einen Turbinenventilator, der primär dazu dient, ein Gebäude zu belüften, wobei er gleichzeitig elektrische Energie erzeugt. Dieser besteht im Wesentlichen aus einem Gehäuse, dass auf einem Dach des Gebäudes angebracht ist, um darin aufsteigende warme Luft aufzunehmen und diese zu Turbinenelementen zu leiten, die außerhalb des Gehäuses angeordnet sind. Die in das Gehäuse durch Eintrittsöffnungen eintretende Luft wird gesammelt und dann durch eine Basis zu den Turbinenelementen geleitet, welche dadurch rotieren. Es ist vorgesehen, dass die Vorrichtung einen Kamin aufweist, durch den Luft eintreten kann. Diese wird dann durch eine Heizspule erwärmt, welche von einem Solarkollektor mit Wärmeenergie versorgt wird. Die erwärmte Luft tritt dann aus dem Kamin aus und treibt das Turbinenelement an.

Es ist Aufgabe der vorliegenden Erfindung, eine Druckerzeugungseinrichtung für eine Anlage zur Erzeugung von Energie aus Wind- und/oder Sonnenenergie dahingehend weiterzuentwickeln, dass ein verbesserter Wirkungsgrad gegeben ist.

Diese Aufgabe wird erfindungsgemäß dadurch gelöst, dass das Gehäuse der Druckerzeugungsvorrichtung eine Lamellen-Anordnung mit einer Anzahl von Lamellen, die durch Spalte getrennt sind, aufweist, dass die Lamellen aus Solarglas gefertigt sind, dass die Luftaustrittsöffnungen zum Austritt von erwärmter Luft aus dem Inneren der Druckerzeugungseinrichtung durch die zwischen den Lamellen der Lamellen-Anordnung befindlichen Spalten gebildet ist.

Die erfindungsgemäße Druckerzeugungseinrichtung für eine Anlage zur Erzeugung von Energie aus Wind- und/oder Solarenergie zeichnet sich dadurch aus, dass sie in vorteilhafter Art und Weise in der Lage ist, aus beiden konträren Energiesystemen - Solarenergie und Windenergie - elektrische Energie zu erzeugen. Die Betriebssicherheit einer die erfindungsgemäße Druckerzeugungseinrichtung verwendenden Anlage zur Energieerzeugung wird dadurch erhöht, da diese auch dann elektrische Energie erzeugt, wenn nur Wind weht, aber keine Sonne scheint, und umgekehrt.

Ein weiterer Vorteil der erfindungsgemäßen Druckerzeugungseinrichtung besteht darin, dass sie kompakt baut und einfach und kostengünstig herzustellen ist.

Eine weitere vorteilhafte Weiterbildung der Erfindung sieht vor, dass die Druckerzeugungseinrichtung als Sogsystem ausgebildet ist. In der Druckerzeugungseinrichtung wird ein Unterdruck erzeugt, welcher bewirkt, dass die Druckerzeugungseinrichtung von einer mit ihr über eine Leitung verbundenen Turbine Luft ansaugt, so dass hierdurch das Turbinenrad dieser Turbine in Rotation versetzt wird.

Ein weiterer Vorteil der Weiterbildung der Erfindung betrifft eine Anlage zur Erzeugung von Energie, insbesondere elektrische Energie aus Wind- und/oder Solarenergie, welche die erfindungsgemäße Druckerzeugungseinrichtung verwendet.

Eine weitere vorteilhafte Weiterbildung der Erfindung betrifft eine Turbine für eine Anlage zur Erzeugung von Energie, insbesondere von elektrischer Energie, aus Wind- und/oder Solarenergie, die ein in einem Gehäuse angeordnetes Turbinenrad aufweist, wobei vorgesehen ist, dass die Turbine ein luftdurchlässiges Innenrohr aufweist, das von einem luftundurchlässigen Außenrohr umgeben ist, und dass die Turbine eine Lufteinlassöffnung mit einem darin angeordneten Turbulator aufweist, durch den die in die Turbine eintretende Luft mit einem Drall versehbar ist.

Weitere vorteilhafte Weiterbildungen der Erfindung sind Gegenstand der Unteransprüche.

Weitere Einzelheiten und Vorteile der Erfindung sind den beiden Ausführungsbeispielen zu entnehmen, die im folgenden anhand der Figuren beschrieben werden. Es zeigen:
- Figur 1:: eine schematische Darstellung eines ersten Ausführungsbeispiels,
- Figur 2:: eine Draufsicht auf das erste Ausführungsbeispiel,
- Figur 3:: ein Schnitt durch das erste Ausführungsbeispiel,
- Figur 4:: eine schematische Darstellung der Wirkungsweise des ersten Ausführungsbeispiels,
- Figur 5:: eine schematische Darstellung eines zweiten Ausführungsbeispiels,
- Figur 6:: ein Schnitt durch das zweite Ausführungsbeispiel,
- Figur 7:: eine schematische Darstellung einer Turbine für eine Anlage zur Energiegewinnung,
- Figur 8:: ein Schnitt durch ein Innenrohr der Turbine gemäß Figur 7,
- Figur 9:: eine schematische Darstellung eines Turbulators,
- Figur 10:: eine schematische Darstellung eines Gleichrichters,
- Figur 11:: eine schematische Darstellung eines dritten Ausführungsbeispiels,
- Figur 12:: eine Seitenansicht des dritten Ausführungsbeispiels der Figur 11,
- Figur 13a und 13b:: eine Draufsicht auf das dritte Ausführungsbeispiel mit zwei unterschiedlichen Varianten einer Spiegelanordnung,
- Figur 14:: eine schematische Darstellung einer Turbine für eine Anlage zur Energiegewinnung, jeweils in einer Schnittdarstellung, und
- Figur 15a bis 15c:: eine schematische Darstellung einer weiteren Turbine für eine Anlage zur Energiegewinnung.

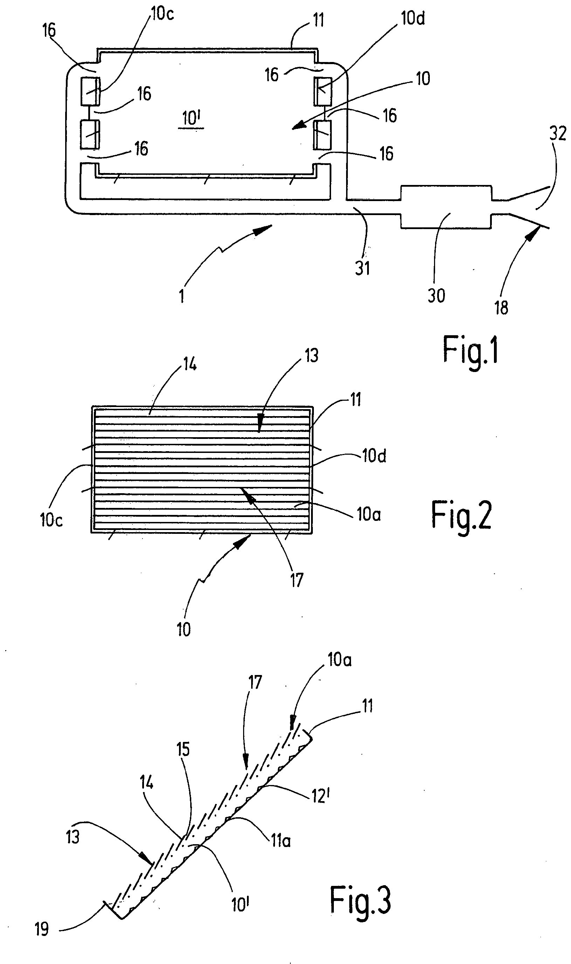

In den Figuren 1 bis 4 ist nun ein erstes Ausführungsbeispiel eine Anlage 1 zur Gewinnung von Energie aus Wind- und/oder Solarenergie schematisch dargestellt. Die Anlage 1 gliedert sich in eine Druckerzeugungseinrichtung 10, in der wie nachstehend beschrieben ein Unterdruck erzeugbar ist. Diese Druckerzeugungseinrichtung 10 steht über eine Leitung 31 mit einer Turbine 30 in Verbindung, die eine Einlassöffnung 32 aufweist, durch welche Umgebungsluft ansaugbar ist. Wird nun in der Druckerzeugungseinrichtung 10 ein Unterdruck erzeugt, so strömt Luft durch die Einströmöffnung 32 in die Turbine 30 ein. Der in der Druckerzeugungseinrichtung 10 herrschende Unterdruck bewirkt nun, dass die durch die Einlassöffnung 32 einströmende Luft weiter zur Druckerzeugungseinrichtung 10 strömt, wodurch ein (in den Figuren 1 bis 4 nicht gezeigtes) Turbinenrad der Turbine 30 in Rotation versetzt wird, so dass dieses einen ebenfalls nicht gezeigten Generator zur Erzeugung von elektrischem Strom antreiben kann. Natürlich ist es auch möglich, dass eine Welle des Turbinenrads der Turbine 30 als Antriebswelle für eine dieser nachgeschalteten mechanischen Vorrichtung dient, so dass die von der Turbine 30 erzeugte und über die Welle an diese Vorrichtung abgegebene Rotationsenergie von dieser genutzt werden kann. Im nachfolgenden wird davon ausgegangen, dass die Turbine 30 zur Erzeugung von elektrischem Strom dient, also einen Generator antreibt.

Um nun den die Turbine 30 antreibenden Unterdruck sowohl durch eine solarthermische und/oder durch die Einwirkung von Windenergie aufbauen zu können, ist die Druckerzeugungseinrichtung 10 wie folgt ausgebildet:
Wie am besten aus der Figur 3 ersichtlich ist, ist die Druckerzeugungseinrichtung 10 kastenförmig aufgebaut und weist ein Gehäuse 11 mit einer Bodenfläche 11 a auf, an oder über der eine Spiegel-Anordnung 12, insbesondere eine Parabolspiegel-Rinne, angebracht ist. An ihrer Oberseite 10a weist die Druckerzeugungseinrichtung 10 eine Lamellen-Anordnung 13 aus Solarglas auf, bei der einzelne Lamellen 14 jeweils durch einen Spalt 15 getrennt sind, so dass im Inneren 10' der Druckerzeugungseinrichtung 10 befindliche Luft durch diese Spalte 15 aufsteigen und somit aus der Druckerzeugungseinrichtung 10 entweichen kann, wodurch in dieser ein die Turbine 30 antreibender Unterdruck aufgebaut wird.

Die Funktionsweise der Druckerzeugungseinrichtung 10 ist nun wie folgt: Das auf die Lamellen-Anordnung 13 auftreffende Sonnenlicht gelangt durch die aus Solarglas gefertigten Lamellen 14 zu der Spiegel-Anordnung 12 und wird von dieser reflektiert. Die Spiegel-Anordnung 12 ist dabei derart ausgebildet, dass ihre Brennlinie im Inneren 10' der Druckerzeugungseinrichtung 10 liegt, so dass die im Innenraum 10' befindliche Luft erwärmt wird, dadurch aufsteigt und durch die Spalte 15 zwischen den Lamellen 14 der Lamellen-Anordnung 13 die Druckerzeugungseinrichtung 10 verlässt. Hierdurch wird durch die Wirkung von Solarenergie der die Turbine 30 antreibende Unterdruck aufgebaut. Der in der Druckerzeugungseinrichtung 10 herrschende Druck ist somit geringer als der an der Eintrittsöffnung 32, so dass in Folge des in der Druckerzeugungseinrichtung 10 herrschenden Unterdrucks Luft durch die Eintrittsöffnung 32, durch die Turbine 30 und über die daran anschließende Leitung 31 ins Innere 10' der Druckerzeugungseinrichtung 10 strömt. Hierdurch wird eine Sog-Strömung ausgebildet, welche die Turbine 30 antreibt.

Wie am besten aus Figur 1 ersichtlich ist, weitet sich die Leitung 31 auf und umgibt derart die Druckerzeugungseinrichtung 10 insbesondere entlang ihrer Seitenflächen 10c, 10d, in der vorzugsweise Einströmöffnungen 16 vorgesehen sind, so dass der die Turbine 30 durchströmende und durch die Leitungen 31 zugeführte Luftstrom auch durch diese Einströmöffnungen 16 in das Innere 10' der Druckerzeugungseinrichtung 10 eintreten kann.

Dem Fachmann ist klar ersichtlich, dass diese Ausgestaltung nicht zwingend ist. Ausreichend für die Funktion der Anlage 1 ist, dass durch die Druckerzeugungseinrichtung 10 ein hinreichend großer Unterdruck aufgebaut wird, so dass über die Leitung 31 Luft von der Turbine 30 angesaugt und ins Innere 10' der Druckerzeugungseinrichtung 10 geleitet wird. Natürlich ist es auch möglich, dass die Leitung 31 einen integralen Bestandteil des Gehäuses 11 der Druckerzeugungseinrichtung 10 darstellt und die Turbine 30 an den Ausgang dieser Einheit ankoppelbar ist.

Um den Austritt der wie vorstehend erwärmten Luft aus dem Innenraum 10' der Druckerzeugungseinrichtung 10 zu erleichtern, ist vorzugsweise vorgesehen, dass - wie am besten aus Figur 3 ersichtlich ist - sich die Lamellen 14 nach oben öffnen, so dass die erwärmte Luft durch die Lamellen 14 begrenzte Spalte 15 aufsteigen kann.

Die Gesamtheit der Spalte 15 bildet somit eine Austrittsöffnung 17 der Druckerzeugungseinrichtung 10 aus, durch welche der die Turbine 30 antreibende Luftstrom aus dieser entweichen kann. In dem hier gezeigten Fall, bei dem die Druckerzeugungseinrichtung 10 als ein Sog-System ausgebildet ist, bildet somit die Einströmöffnung 32 der Turbine 30 eine Eintrittsöffnung 18 für den die Anlage 1 durchströmenden Luftstrom aus.

Bei der vorstehenden Beschreibung wird davon ausgegangen, dass im Inneren 10' der Druckerzeugungseinrichtung 10 und benachbart zu deren Boden 11 a eine Spiegel-Anordnung 12 zur Reflektion und Bündelung des in die Druckerzeugungseinrichtung 10 einfallenden Sonnenlichts vorgesehen ist. Das ist aber nicht zwingend, es können auch andere Maßnahmen vorgesehen sein, um durch das einfallende Sonnenlicht die im Inneren 10' befindliche Luft zu erwärmen und sie dadurch zu einem Aufsteigen zu zwingen, was in der Ausbildung des die Turbine 30 antreibenden Unterdrucks resultiert. Z. B. kann durch eine entsprechende Ausgestaltung der Druckerzeugungseinrichtung 10 der so genannte "TreibhausEffekt" zur Erwärmung der im Inneren 10' befindlichen Luft genützt werden. Wesentlich ist also nur, dass die Druckerzeugungseinrichtung 10 Mittel aufweist, durch welche einfallendes Sonnenlicht zur Erhöhung der Temperatur der im Inneren 10' der Druckerzeugungseinrichtung 10 befindlichen Luft verwendbar ist.

In den Figuren 1 bis 4 ist eine parallele Anordnung der Spiegel-Anordnung 12 und der Lamellen-Anordnung 13 gezeigt. Dies ist nicht zwingend. Es ist auch möglich, dass zwischen diesen beiden Anordnungen 12, 13 ein Winkel ausgebildet ist. Wesentlich ist nur, dass durch die Spiegel-Anordnung 12 das durch die Lamellen-Anordnung 13 hindurchtretende Sonnenlicht aufgefangen und dadurch die Luft im Inneren 10' der Druckerzeugungseinrichtung 10 erwärmt wird.

In der Praxis wird die Druckerzeugungseinrichtung 10 regelmäßig auf einem Hausdach montiert ist, dessen Dachfläche unter einem gewissen Winkel geneigt verläuft. In einem derartigen Fall ist dann eine Anordnung der Spiegel-Anordnung 12 und der Lamellen-Anordnung 13 unter einem auf die Dachneigung abgestimmten Winkel sinnvoll. Es ist auch denkbar, dass die Spiegel-Anordnung 12 und die Lamellen-Anordnung 13 derart im Gehäuse 11 angeordnet sind, dass der von ihnen eingeschlossene Winkel variabel ist. Eine derartig ausgestaltete Druckerzeugungseinrichtung 10 kann dann einfach auf die jeweils herrschenden Montageverhältnisse angepasst werden.

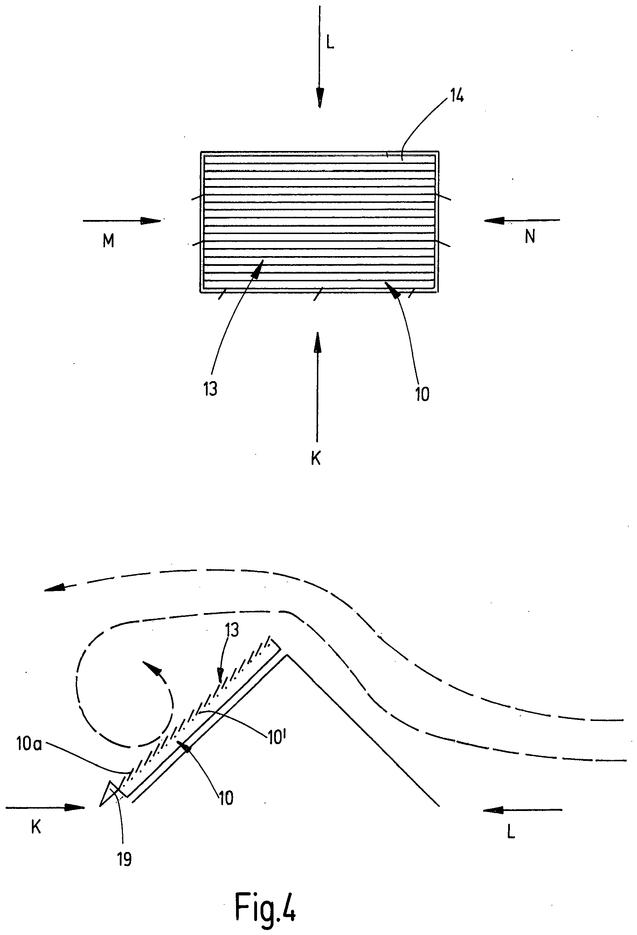

Die durch eine solarthermische Beaufschlagung der Druckerzeugungseinrichtung 10 bewirkte Ausbildung von Unterdruck wird - wie anhand der Figur 4 beschrieben - durch die Einwirkung einer Windströmung verstärkt oder - bei fehlender Sonnenstrahlung - dadurch ersetzt:
In der Figur 4 sind schematisch vier Windrichtungen K, L, M, N dargestellt, wobei - wie insbesondere aus der unteren Abbildung der Figur 4 ersichtlich ist - die Windrichtung K derart verläuft, dass sie im wesentlichen orthogonal auf die Lamellen-Anordnung 13 trifft, so dass sich die Lamellen-Anordnung 13 an der Luv-Seite der Windströmung der Richtung K befindet. In entsprechender Art und Weise entsteht dann bei einer aus der Richtung L verlaufenden Windströmung der Druckerzeugungseinrichtung 10 von der Lee-Seite dar.

Strömt nun Luft aus der Richtung K über die in Figur 4 dargestellte Oberfläche 10a der Druckerzeugungseinrichtung 10, so nimmt sie die aus der Druckerzeugungseinrichtung 10 aufsteigende Luft mit und bewirkt somit ein verbessertes Abströmen derselben aus dem Inneren 10' der Druckerzeugungseinrichtung 10, so dass der Unterdruck weiter erhöht wird.

Von Vorteil ist, wenn die Druckerzeugungseinrichtung 10 - wie in Figur 3 dargestellt - schräg angestellt ist. Durch diese Schrägstellung entsteht - ähnlich wie bei einer Tragfläche eines Flugzeugs - eine induzierte Geschwindigkeit, die sich zu der Strömungsgeschwindigkeit der auf die Druckerzeugungseinrichtung 10 auftreffenden Luftströmung addiert. Die im Inneren 10' der Druckerzeugungseinrichtung 10 befindliche Luft wird dadurch noch besser angesaugt, womit der Unterdruck noch weiter erhöht wird.

Wie aus der unteren Abbildung der Figur 4 ersichtlich ist, wird durch die Schrägstellung auch erreicht, dass aus der Richtung L anströmende Luft, also von der Lee-Seite der Druckerzeugungseinrichtung 10 diese beaufschlagende Luft, dann verwirbelt wird, wodurch über der Fläche 10a der Druckerzeugungseinrichtung 10 eine Wirbelbildung und somit ein Unterdruck induziert wird.

Durch diese Schrägstellung der Druckerzeugungseinrichtung 10 erhöht sich auch die induzierte Geschwindigkeit des aus der Richtung K auf diese auftreffenden Windstroms, wodurch sich diese induzierte Geschwindigkeit zu der Anströmgeschwindigkeit des Windes addiert. Die daraus resultierende erhöhte Geschwindigkeit bewirkt eine verbesserte Erzeugung von Unterdruck im Inneren 10' der Druckerzeugungseinrichtung 10.

Um diesen Effekt noch zu verstärken, kann vorgesehen sein, dass die Druckerzeugungseinrichtung 10 Turbulatoren 19 wie Tragflächensegmente, Trapezflügel, angestellte Leitelemente, etc. aufweist, welche die induzierte Geschwindigkeit und somit die Geschwindigkeit des die Druckerzeugungseinrichtung 10 mittel Drall beaufschlagenden Luftstroms erhöhen. Hierdurch wird ein erhöhter Unterdruck im Inneren 10' der Druckerzeugungseinrichtung 10 erzeugt, wodurch deren Wirkungsgrad verbessert wird.

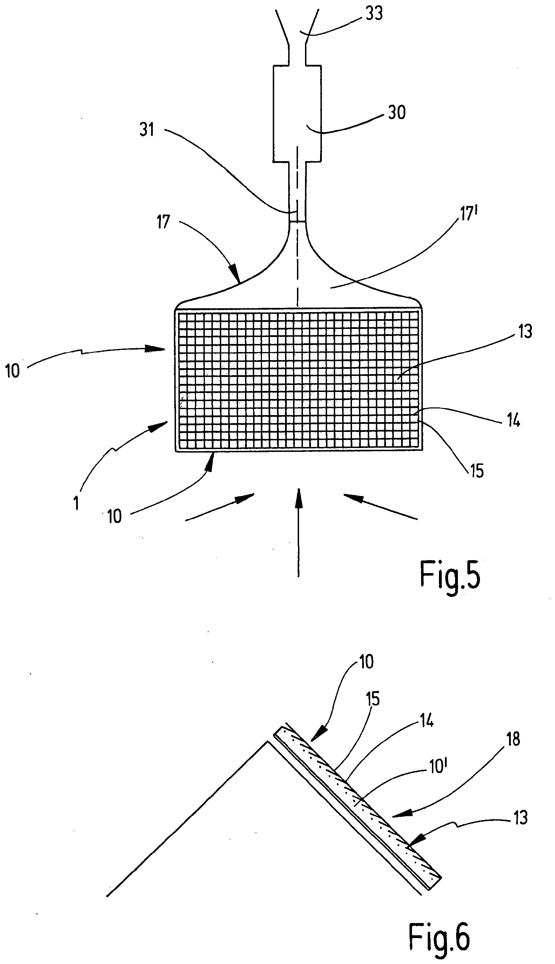

In den Figuren 5 und 6 ist ein zweites Ausführungsbeispiel der Vorrichtung 1 dargestellt, bei dem einander entsprechende Bauteile mit den gleichen Bezugszeichen versehen und nicht mehr näher beschrieben werden. Der wesentliche Unterschied zwischen dem ersten und dem zweiten Ausführungsbeispiel besteht nun darin, dass die Druckerzeugungseinrichtung 10 nicht - wie im ersten Ausführungsbeispiel - dazu dient, einen Unterdruck zu erzeugen, sondern, dass mit dieser ein Überdruck erzeugt wird. Die im Inneren 10' der Druckerzeugungseinrichtung 10 befindliche, von der diese beaufschlagenden Sonnenenergie erhitzte Luft strömt bei dem zweiten Ausführungsbeispiel dann nicht mehr - wie beim ersten Ausführungsbeispiel - durch die Spalten 15 zwischen den Lamellen 14 der Lamellen-Anordnung 13 aus, sondern die Druckerzeugungseinrichtung 10 weist - wie am besten aus Figur 6 ersichtlich ist - eine Luftauslassöffnung 17' auf, durch welche die erwärmte Luft ausströmt und über die Leitung 31 zur Turbine 30 geleitet und durch eine Austrittsöffnung 33 aus dieser ausströmt. Im Gegensatz zum ersten Ausführungsbeispiel strömt die der Turbine 30 zuzuführenden Luft im zweiten Ausführungsbeispiel durch die zwischen den Lamellen 14 angeordnete Spalte 15 in das Innere 10' der Druckerzeugungseinrichtung 10 ein, die Spalte 15 der Lamellen-Anordnung 13 bildet somit beim zweiten Ausführungsbeispiel die Lufteintrittsöffnung 18 aus. Dies kann dadurch erreicht werden, dass bei der Verwendung der Druckerzeugungseinrichtung 10 als Überdruckerzeugungseinrichtung sie in einer zum ersten Ausführungsbeispiel um 180° um eine Hochachse gedrehten Anordnung montiert wird, so dass die Lamellen 14 der Lamellen-Anordnung 13 und somit die zwischen den Lamellen 14 befindlichen Spalte 15 nach unten orientiert sind, so dass angesaugte Umgebungsluft durch Sonneneinstrahlung erwärmt wird, nach oben steigt und durch die Luftauslassöffnung 17' aus der Druckerzeugungseinrichtung 10 ausströmt und über die Leitung 31 zur Turbine 30 gelangt.

Wie am besten aus der Figur 6 ersichtlich ist, sind beim zweiten Ausführungsbeispiel daher die Lamellen 14 der Lamellen-Anordnung 13 derart ausgerichtet, dass die durch sie definierten Spalte 15 ein leichtes Einströmen des auf die Oberfläche 10b auftreffenden Luftstroms in das Innere 10' der Druckerzeugungseinrichtung 10 ermöglichen. Es ist vorgesehen, dass das Gehäuse 11 der Druckerzeugungseinrichtung 10 derart ausgebildet ist, dass die im Inneren 10' befindliche und durch die Spiegel-Anordnung 12 erwärmte Luft aus diesem im wesentlichen nur durch die Auslassöffnung 17' austreten kann. Hierdurch wird die von der die Druckerzeugungseinrichtung 10 beaufschlagende Windströmung hervorgerufene Überdruck durch die Wirkung der Solarenergie erhöht.

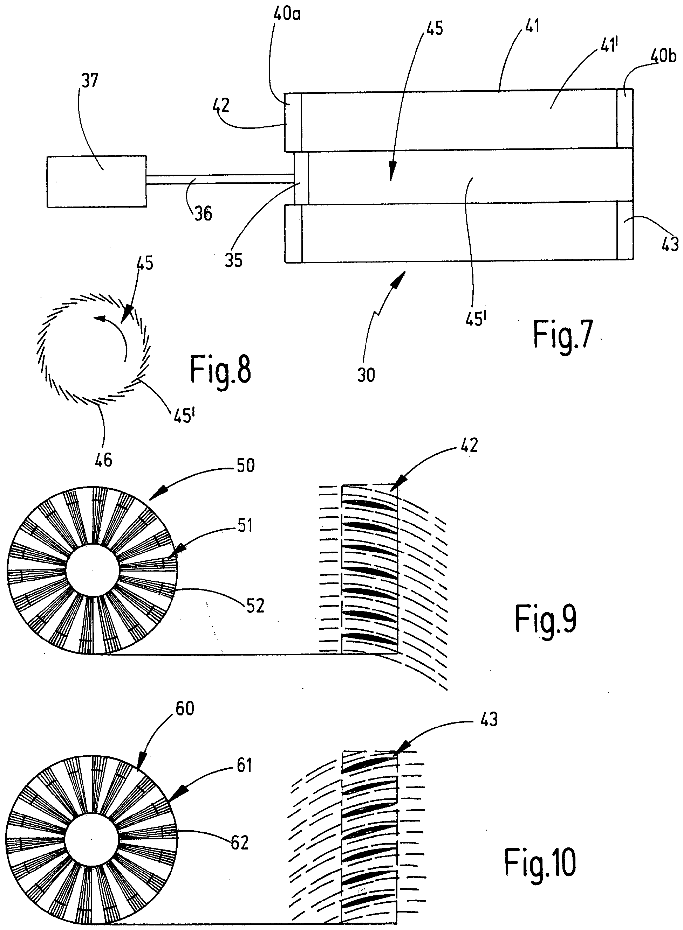

In den Figuren 7 bis 10 ist nun ein Ausführungsbeispiel einer für die Anlage 1 besonders geeigneten Turbine 30 dargestellt. Diese weist ein Gehäuse 41, z. B. ein luftundurchlässiges Außenrohr 41', auf, das an einer Seite 40a eine Lufteinlassöffnungen 42 aufweist, durch welche der Turbine 30 die durch die Einlassöffnung 32 eintretende Luft zuführbar ist. Diese treibt dann ein Turbinenrad 35 an, welches über eine Welle 36 mit einem Generator 37 verbunden ist. An einer der Seite 40a gegenüberliegenden Seite 40b weist das Gehäuse 40 eine Luftauslassöffnung 43 auf, durch welche der der Turbine 30 zugeführte Luftstrom aus dem Gehäuse 40 austreten und in die Leitung 31 eintreten kann.

Im Gehäuse 40 ist ein luftdurchlässiges Innenrohr 45 angeordnet, das im hier gezeigten Fall als ein Lamellenrohr 45' ausgebildet ist, welches in Figur 8 im Querschnitt gezeigt ist. Das Innenrohr 45 ist an der Seite 40b des Gehäuses verschlossen, so dass Luft nur durch Lamellen 46 des Lamellenrohrs 45 austreten kann.

In der Lufteinlassöffnung 42 ist ein Turbulator 50 vorgesehen, wie er in Figur 9 dargestellt ist. Er ist als ein Schaufelrad 51 ausgebildet und dient dazu, der über die Eintrittsöffnung 32 einströmenden Luft einen Drall zu verleihen, wobei Schaufeln 52 des Turbulators 50 vorzugsweise einen tragflächenartigen Querschnitt besitzen. Der Turbulator 50 dient also dazu, aus der linearen Strömung der zufließenden Luft eine spiralförmige Strömung auszubilden. Die derart erzeugte spiralförmige Strömung tritt durch die Lamellen 46 des Innenrohrs 45' in den Zwischenraum zwischen Innenrohr 45' und Außenrohr 41' ein und bewirkt einen erhöhten Unterdruck an der Außenseite des Innenrohrs 45', der auf Fliehkraft-Effekten und der Strömungsgeschwindigkeit gemäß dem Gesetz von Bernoulli beruht. Hierdurch wird ein verbesserter Antrieb des Turbinenrads 35 bewirkt.

In der Luftauslassöffnung 43 ist ein in Figur 10 dargestellter Gleichrichter 60 angeordnet, der wieder als Schaufelrad 61 mit Schaufeln 62 ausgebildet ist. Dieser bewirkt, dass die spiralförmige Strömung im Inneren der Turbine 30 wieder in eine lineare Strömung verwandelt wird, die leicht über die Leitung 31 zur Druckerzeugungseinrichtung 10 abfließen kann.

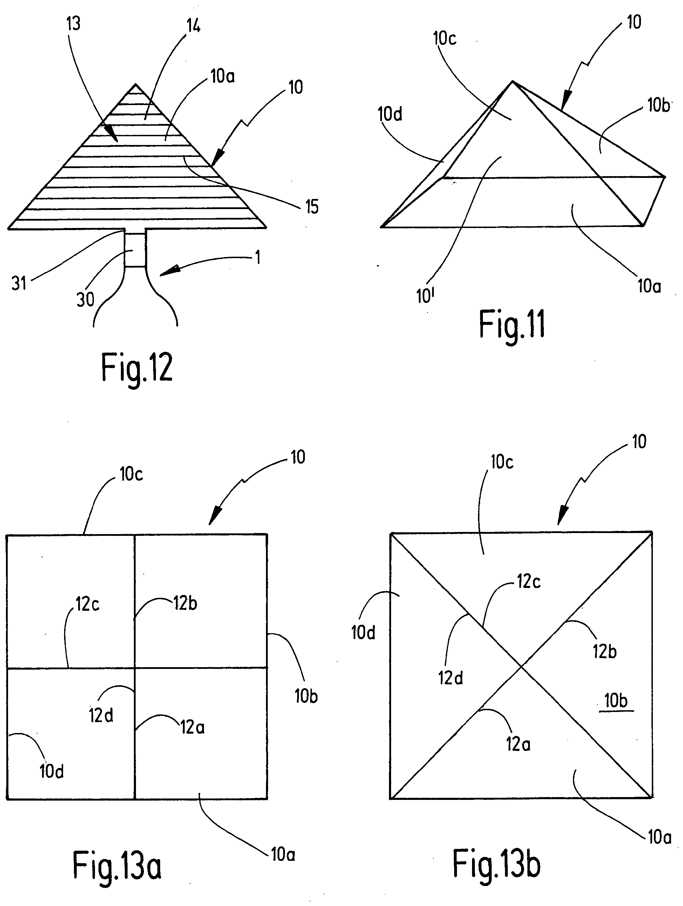

In den Figuren 11 bis 13b ist nun ein drittes Ausführungsbeispiel der Vorrichtung dargestellt, bei dem einander entsprechende Bauteile mit den gleichen Bezugszeichen versehen und nicht mehr erneut näher beschrieben werden. Das Charakteristische des dritten Ausführungsbeispiels der Vorrichtung 1 ist nun, dass die Druckerzeugungseinrichtung 10 in Pyramidenform ausgebildet ist. Hierzu werden vier dreiecksförmige Druckerzeugungseinrichtungen 10a-10d im rechten Winkel zueinander angeordnet, so dass eine Pyramidenform entsteht. An den jeweiligen Außenseiten der Pyramide sind Lamellen-Anordnungen 13 aus Solarglas (in Figur 11 nicht gezeigt) angeordnet, bei denen die einzelnen Lamellen 14 jeweils wiederum durch einen Spalt 15 getrennt sind, so dass die im Inneren 10' der einzelnen Druckerzeugungseinrichtungen 10a-10d befindliche Luft durch diese Spalte 15 aufsteigen und somit auf die Druckerzeugungseinrichtung 10 entweichen kann, wodurch in dieser ein die Turbine 30 antreibender Unterdruck aufgebaut wird. Die im Inneren der Pyramide befindliche Spiegelanordnung 12 ist dabei aus vier Teil-Spiegelanordnungen 12a-12d ausgebildet, wobei diese - wie in Figur 13a dargestellt - gegenüberliegende Seiten oder - wie in Figur 13b dargestellt - gegenüberliegende Ecken der Pyramide verbinden. Hierdurch entstehen dreiecksförmige Spiegelflächen, die sich in der Mitte schneiden und im rechten Winkel stehen. Eine derartige Ausbildung hat den Vorteil, dass der vom Wind erzeugte Unterdruck an vier Seiten entsteht und somit der Wirkungsgrad erhöht wird. Auch die Windrichtung spielt hierdurch keine Rolle mehr, sondern nurmehr die Windstärke.

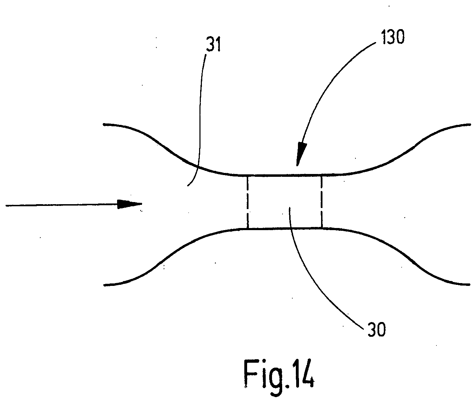

In der Figur 14 ist nun eine weitere Ausführungsform einer Turbine für eine Anlage zur Energiegewinnung dargestellt. Das die Turbine 30 mit der Druckerzeugungseinrichtung 10 verbindende Rohr 31 ist hier als eine Venturi-Rohr mit einer Engstelle 130 ausgebildet und die Turbine 30 ist in diese Engstelle 130 des Venturi-Rohrs angebracht. Da hier gemäß dem Gesetz von Bernoulli die höchste Strömungsgeschwindigkeit herrscht, wird dadurch ein höherer Wirkungsgrad erreicht.

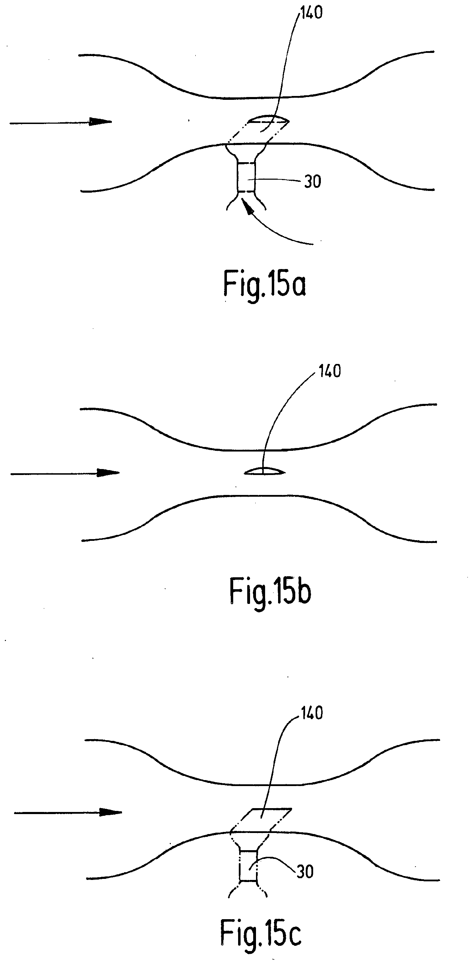

In den Figuren 15a bis 15c ist nun eine weitere Ausgestaltung des vorstehenden Aufbaus gezeigt, so dass einander entsprechende Teile mit gleichen Bezugszeichen versehen und nicht mehr näher beschrieben werden. Der wesentliche Unterschied zwischen der Ausführungsform der Figuren 14a und 14b und derjenigen der Figuren 15a bis 15c ist, dass in der Engstelle 130 des Venturi-Rohrs ein Tragflächensegment 140 angeordnet ist. Dieses ist - wie aus der Draufsicht der Figur 15b am besten ersichtlich - vorzugsweise trapezförmig, innen hohl und auf beiden Seiten offen ausgebildet, wobei seine Unterseite fest mit der Engstelle 130 des Venturi-Rohrs verbunden ist. Die Oberseite dieses Tragflächensegments 140 steht in der Mitte der Strömung. Bei der Anströmung dieses Tragflächensegments 140 entsteht auf der einen Seite ein Unterdruck, auf der anderen Seite ein Überdruck. Durch den Druckausgleich zwischen beiden Seiten wird das obere Ende des Tragflächensegments 140 stärker umströmt. Es entsteht der sogenannte Randwirbel, in dessen Zentrum ein starker Unterdruck herrscht. Dieser Unterdruck saugt Luft an, wodurch die Turbine angetrieben wird. Durch die trapezförmige Anordnung entsteht eine induzierte Geschwindigkeit, die das Potential des durch das Tragflächensegment 140 bewirkten Wirbels und somit den Wirkungsgrad der Vorrichtung erhöht.

Zusammenfassend ist festzuhalten, dass durch die beschriebenen Maßnahmen eine Druckerzeugungseinrichtung 10 geschaffen wird, welche sich dadurch auszeichnet, dass sie sowohl Solarenergie als auch Windenergie zur Erzeugung von Energie, insbesondere von elektrischem Strom, verwenden kann. Die Druckerzeugungseinrichtung 10 baut kompakt und ist daher leicht, insbesondere auch auf Hausdächern, zu montieren. In Folge der kombinierten Ausnutzung von Wind- und Solarenergie wird die Betriebssicherheit einer diese Druckerzeugungsvorrichtung 10 verwendenden Anlage zur Erzeugung von Energie aus Solar- und/oder Windenergie erhöht.

## Patentansprüche

1. Druckerzeugungseinrichtung für eine Anlage zur Erzeugung von Energie aus Solar- und/oder Windenergie, wobei die Anlage (1) eine Turbine (30) aufweist, die über eine Leitung (31) mit der Druckerzeugungseinrichtung (10) verbunden ist, wobei die Druckerzeugungseinrichtung (10) ein Gehäuse (11) mit mindestens einer Lufteintrittsöffnung (17), durch welche Luft in das Innere (10') der Druckerzeugungseinrichtung (10) eintretbar ist, und mit mindestens einer Luftaustrittsöffnung (17'), durch welche erwärmte Luft aus dem Inneren (10') der Druckerzeugungseinrichtung austretbar ist, aufweist, wobei die Druckerzeugungseinrichtung (10) Mittel zur Umwandlung der einfallenden Solarenergie in thermische Energie aufweist, so dass durch diese Mittel die im Innenraum (10') der Druckerzeugungseinrichtung (10) befindliche Luft erwärmbar ist, wodurch die Druckerzeugungseinrichtung (10) in deren Inneren (10') einen Unterdruck erzeugt, dass die Lufteintrittsöffnung (17) der Druckerzeugungseinrichtung (10) durch ein oder mehrere Öffnungen (16) im Gehäuse (11) ausgebildet ist oder sind, **dadurch gekennzeichnet, dass** das Gehäuse (11) der Druckerzeugungsvorrichtung (10) eine Lamellen-Anordnung (13) mit einer Anzahl von Lamellen (14), die durch Spalte (15) getrennt sind, aufweist, dass die Lamellen (14) aus Solarglas gefertigt sind, dass die Luftaustrittsöffnungen (17') zum Austritt von erwärmter Luft aus dem Inneren (10') der Druckerzeugungseinrichtung (10) durch die zwischen den Lamellen (14) der Lamellen-Anordnung (13) befindlichen Spalten (15) gebildet ist

2. Druckerzeugungseinrichtung nach Anspruch 1, **dadurch gekennzeichnet, dass** die Mittel zur Umwandlung von Solarenergie in thermische Energie durch eine Spiegel-Anordnung (12) ausgebildet ist.

3. Druckerzeugungseinrichtung nach einem der vorangehenden Ansprüche, **dadurch gekennzeichnet, dass** die Druckerzeugungseinrichtung (10) mindestens einen Turbulator (50) aufweist.

4. Anlage zur Erzeugung von Energie, insbesondere elektrischer Energie, aus Wind- und/oder Solarenergie, wobei die Anlage (1) eine Turbine (30) aufweist, die mit einer Leitung (31) mit der Druckerzeugungseinrichtung (10) verbunden ist, **gekennzeichnet durch** eine Druckerzeugungseinrichtung (10) nach einem der vorangehenden Ansprüche.

5. Anlage nach Anspruch 4, **dadurch gekennzeichnet, dass** die Turbine (30) eine Einlassöffnung (32) aufweist, durch welche Luft in die Turbine (30) eintretbar und über die Leitung (31) zu der einen Unterdruck ausbildenden Druckerzeugungseinrichtung (10) strömt.

6. Anlage nach einem der vorangehenden Ansprüche, **dadurch gekennzeichnet, dass** die die Turbine (30) mit der Druckerzeugungseinrichtung (10) verbindende Leitung (31) als ein Venturi-Rohr mit einer Engstelle (130) ausgebildet ist, und dass die Turbine (30) in der Engstelle (130) dieses Venturi-Rohrs angeordnet ist.

7. Anlage nach einem der vorangehenden Ansprüche, **dadurch gekennzeichnet, dass** in der Leitung (31) ein Tragflächensegment (140) angeordnet ist.

8. Turbine für eine Anlage zur Erzeugung von Energie nach einem der vorangehenden Ansprüche, insbesondere elektrischer Energie, aus Wind- und/oder Solarenergie, die ein in einem Gehäuse angeordnetes Turbinenrad (35) aufweist, **dadurch gekennzeichnet, dass** die Turbine (30) ein luftdurchlässiges Innenrohr (45) aufweist, das von einem luftundurchlässigen Außenrohr (41') umgeben ist, und dass die Turbine (30) eine Lufteinlassöffnung (42) mit einem darin angeordneten Turbulator (50) aufweist, durch den die in die Turbine (30) eintretende Luft zur Ausbildung eines spiralförmigen Strömungsverlaufs mit einem Drall versehbar ist.

9. Turbine nach Anspruch 8, **dadurch gekennzeichnet, dass** die Turbine eine Luftauslassöffnung (43) aufweist, in der ein Gleichrichter (60) angeordnet ist.

10. Turbine nach einem der Ansprüche 8 oder 9, **dadurch gekennzeichnet, dass** das Innenrohr (45) als ein Lamellenrohr (45') mit Lamellen (46) ausgebildet ist, so dass über die Lufteinlassöffnung (42) einströmende Luft durch die Lamellen (46) des Lamellenrohrs (45') hindurchtretbar ist.

## Claims

1. A pressure generating device for an installation for energy generation from at least one of solar and wind energy, the installation (1) having a turbine (30), which is connected via a conduct (31) with the pressure generating device (10), the pressure generating device (10) having a casing (11) comprising at least one air inlet (17), through which air can enter into the interior (10') of the pressure generating device (10), and at least one air outlet (17'), through which heated air can exit the interior (10') of the pressure generating device (10), the pressure generating device (10) comprising means for conversion of impacting solar energy into thermal energy, so that by these means the air being in the interior (10') of the pressure generating device (10) can be heated, whereby the pressure generating device (10) creates a negative pressure in the interior (10'), that the air inlet (17) of the pressure generating device (10) is formed by one or more openings (16) of casing (11), **characterized in that** the casing (11) of the pressure generating device (10) has a lamella arrangement (13) with a number of lamellas (14) being separated by gaps (15), that the lamellas (14) are made of solar glass, that the air outlet (17') allowing an exit of heated air from the interior (10') of the pressure generating device (10) is formed by the gaps (15) provided between the lamellas (14) of the lamella arrangement (13).

2. The pressure generating device according to claim 1, **characterized in that** the means for converting solar energy to thermal energy are formed as a mirror arrangement (12).

3. The pressure generating device according to one of the preceding claims, **characterized by** the pressure generating device (10) comprising at least one turbulator (50).

4. An installation for the generation of energy, in particular electrical energy, from at least one of wind and solar energy, the installation (1) comprises a turbine (30) which is connected to the pressure generating device (10) by a conduct (31), **characterized by** a pressure generating device (10) according to one of the preceding claims.

5. The installation according to claim 4, **characterized in that** the turbine (30) comprises an inlet (32), through which air can enter into the turbine (30) and can flow through the conduct (31) to the pressure generating device (10) generating a negative pressure.

6. The installation according to one of the preceding claims, **characterized in that** the conduct (31) connecting the turbine (30) and the pressure generating device (10) is formed as a Venturi tube with a bottleneck (130) and the turbine (30) is arranged in the bottleneck (130) of this Venturi tube.

7. The installation according to one of the preceding claims, **characterized by** an airfoil segment (140) arranged in the conduct (31).

8. A turbine for an installation for generating energy, in particular electrical energy, from at least one of wind and solar energy, which comprises a turbine wheel (35) arranged in a casing, **characterized in that** the turbine (30) comprises an inner tube (45) permeable to air, which is surrounded by an outer tube (41') impermeable to air, and that the turbine (30) comprises an air inlet (42) with a turbulator (50) arranged therein, through which the air entering the turbine (30) is provided with a swirl for generating a spiral-like air flow.

9. A turbine according to claim 8, **characterized in that** the turbine comprises an air outlet (43) in which a rectifier is arranged.

10. A turbine according to one of the claims 8 or 9, **characterized in that** the inner tube (45) is formed as a lamella tube (45') with lamellas (46), so that the air flowing in from the air inlet (42) can pass through the blades (46) of the blade tube (45').

## Revendications

1. Dispositif de production de pression pour une installation servant à produire de l'énergie à partir de l'énergie solaire et/ou éolienne, dans lequel l'installation (1) présente une turbine (30), qui est reliée par l'intermédiaire d'un conduit (31) au dispositif de production de pression (10), dans lequel le dispositif de production de pression (10) présente un boîtier (11) avec au moins une ouverture d'entrée d'air (16), par laquelle de l'air peut entrer dans l'espace intérieur (10') du dispositif de production de pression (10), et avec au moins une ouverture de sortie d'air (17'), par laquelle de l'air réchauffé peut sortir hors de l'espace intérieur (10') du dispositif de production de pression, dans lequel le dispositif de production de pression (10) présente des moyens servant à transformer l'énergie solaire incidente en une énergie thermique de sorte que l'air se trouvent dans l'espace intérieur (10') du dispositif de production de pression (10) puisse être réchauffé par lesdits moyens, moyennant quoi le dispositif de production de pression (10) produit, dans son espace intérieur (10'), une pression négative, que l'ouverture d'entrée d'air (17) du dispositif de production de pression (10) soit réalisée par une ou plusieurs ouvertures (16) dans le boîtier (11), **caractérisé en ce que** le boîtier (11) du dispositif de production de pression (10) présente un ensemble de lamelles (13) avec un nombre donné de lamelles (14), qui sont séparées par des interstices (15), **en ce que** les lamelles (14) sont confectionnées à partir de verre solaire, **en ce que** les ouvertures de sorties d'air (17') sont formées pour flaire sortir l'air réchauffé de l'espace intérieur (10') du dispositif de production de pression (10) à travers les interstices (15) se trouvant entre les lamelles (14) de l'ensemble de lamelles (13).

2. Dispositif de production de pression selon la revendication 1, **caractérisé en ce que** les moyens servant à transformer l'énergie solaire en une énergie thermique sont réalisés par un ensemble de miroirs (12).

3. Dispositif de production de pression selon l'une quelconque des revendications précédentes, **caractérisé en ce que** le dispositif de production de pression (10) présente au moins un turbulateur (50).

4. Installation servant à produire de l'énergie, en particulier de l'énergie électrique, à partir d'énergie éolienne et/ou solaire, dans laquelle l'installation (1) présente une turbine (30), qui est reliée par un conduit (31) au dispositif de production de pression (10), **caractérisés par** un dispositif de production de pression (10) selon l'une quelconque des revendications précédentes.

5. Installation selon la revendication 4, **caractérisée en ce que** la turbine (30) présente une ouverture d'admission (32), par laquelle de l'air peut entrer dans la turbine (30) et circule, en passant par le conduit (31), en direction du dispositif de production de pression (10) réalisant une pression négative.

6. Installation selon l'une quelconque des revendications précédentes, **caractérisée en ce que** le conduit (31) reliant la turbine (30) au dispositif de production de pression (10) est réalisé sous la forme d'un tube de venturi avec un étranglement (130), et **en ce que** la turbine (30) est disposée dans l'étranglement (130) dudit tube de venturi.

7. Installation selon l'une quelconque des revendications précédentes, **caractérisée en ce qu'**un segment de surfaces de support (140) est disposé dans le conduit (31).

8. Turbine pour une installation servant à produire de l'énergie selon l'une quelconque des revendications précédentes, en particulier de l'énergie électrique, à partir d'une énergie éolienne et/ou solaire, laquelle présente une roue de turbine (35) disposée dans un boîtier, **caractérisée en ce que** la turbine (30) présente un tube intérieur (45) laissant passer l'air, qui est entouré d'un tube extérieur (41') ne laissant pas passer l'air, et **en ce que** la turbine (30) présente une ouverture d'admission d'air (42) avec un turbulateur (50) disposée dans celle-ci, par lequel l'air entrant dans la turbine (30) peut être doté d'un moment cinétique afin de réaliser un profil d'écoulement en forme de spirale.

9. Turbine selon la revendication 8, **caractérisée en ce que** la turbine présente une ouverture d'évacuation d'air (43), dans laquelle un redresseur (60) est disposé.

10. Turbine selon l'une quelconque des revendications 8 ou 9, **caractérisée en ce que** le tube intérieur (45) est réalisé sous la forme d'un tube à lamelles (45') avec des lamelles (46) de sorte que l'air affluant par l'intermédiaire de l'ouverture d'admission d'air (42) puisse traverser les lamelles (46) du tube à lamelles (45').
